# EUROPEAN PATENT APPLICATION

(11) **EP 3 641 140 A1**
(43) Date of publication of application: **22.04.2020**
(21) Application number: 18200959.7
(22) Date of filing: 17.10.2018
(51) Int. Cl.: H04B 1/04, H04B 7/06

(54) **POWER SUPPLY SYSTEM, SMART ANTENNA, METHOD**

(71) Applicant: Xilinx, Inc., San Jose, California 95124 (US)
(72) Inventor: MEYER, Peter, 01109 Dresden (DE)
(74) Representative: Kehl, Ascherl, Liebhoff & Ettmayr Patentanwälte Partnerschaft mbB

(57) **Abstract**

The present invention provides a power supply system (100) for power amplifiers (151, 152, 153, 674) of a smart antenna (150, 350, 450), the power supply system (100) comprising a communication interface (101) configured to receive beamforming information (102), an amplitude calculator (103, 203) coupled to the communication interface (101) and configured to calculate for each one of the power amplifiers (151, 152, 153, 674) a voltage amplitude (104, 105, 106, 204) based on the received beamforming information (102), and a controllable energy source (107, 675) that is configured to set for each one of the power amplifiers (151, 152, 153, 674) a supply voltage (108, 109, 110) based on the calculated voltage amplitude (104, 105, 106, 204) and to provide each of the power amplifiers (151, 152, 153) with electrical energy at the respective supply voltage (108, 109, 110). Further, the present invention provides a smart antenna and a method.

## Description

### TECHNICAL FIELD

The invention relates to a power supply system for power amplifiers of a smart antenna. Further, the present invention relates to a respective smart antenna and to a respective method.

### BACKGROUND

Although applicable to any power amplifier, the present invention will mainly be described in conjunction with power amplifiers in smart antennas or massive MIMO antennas.

Today wireless communication networks are widely used for providing voice and data communication to users. Such wireless communication networks, like e.g. LTE based or so-called 4G networks, usually comprise a core network and a so-called radio access network or RAN. It is understood, that each of these interrelated networks may comprise a plurality of different elements, modules or units that together provide the required communication capabilities.

As part of the RAN so called eNodeBs or base stations provide the link between the operator's network and the users mobile devices or user equipments (UEs). Usually the eNodeBs will comprise antennas that serve for transmitting outgoing signals to the UEs and for receiving incoming signals from the UEs. Up to now, most commonly passive or active antennas with fixed radiation patterns are used.

However, in the future, especially in modern 5G-Networks, such conventional antennas may be replaced by massive MIMO antennas, also called smart antennas. Such antennas comprise a plurality of single antenna elements and may form and steer a plurality of beams at the same time.

In massive MIMO or beamforming antennas a large number of independent receive and transmit paths (RX/TX) are used. A complete array may e.g. be built out of eight columns, each with eight antenna elements, and a combiner that also serves as an interface to the baseband of a cellular base station.

A dedicated radio unit with its own transceiver and power amplifier may be provided for every antenna element of a massive MIMO antenna. The power amplifiers are significant or even dominant contributors to the power consumption and the heat production of an active or massive MIMO antenna. Especially the heat production may pose a problem since usually no active cooling is applied and therefore large and heavy heatsinks are required.

In an example the e.g. 64 power amplifiers of a smart antenna may be operated all with the same supply voltage as if maximum output power would be required for all the power amplifiers. However, the power consumption of the power amplifiers depends on the applied supply voltage and not on the signal strength that is injected into the power amplifiers. Therefore, even with low power input signals, the power consumption of the power amplifiers will be high.

A possibility to reduce the power consumption of the power amplifiers is via envelop tracking. This technique is normally used for single power amplifier control but can also be applied to multiple power amplifiers. For envelop tracking the current envelop of the input signal to the power amplifier is estimated and is used to adjust the power supply of the power amplifier to allow for optimal operation points. However, with envelop tracking the power amplifier must be adjusted in very short time periods. Since some processing time is required to estimate the envelop while the signal is already fed through the power amplifier, the signal must be delayed and the control of the power supply must be very fast.

Accordingly, there is a need for an improved power control of amplifiers in antennas.

### SUMMARY OF THE INVENTION

The above stated problem is solved by the features of the independent claims. It is understood, that independent claims of a claim category may be formed in analogy to the dependent claims of another claim category.

Accordingly, it is provided:
A power supply system for power amplifiers of a smart antenna, the power supply system comprising a communication interface configured to receive beamforming information, an amplitude calculator coupled to the communication interface and configured to calculate for each one of the power amplifiers a voltage amplitude based on the received beamforming information, and a controllable energy source that is configured to set for each one of the power amplifiers a supply voltage based on the calculated voltage amplitude and to provide each of the power amplifiers with electrical energy at the respective supply voltage.

Further, it is provided:
A smart antenna comprising a baseband interface couplable to a baseband unit and configured to receive beamforming information, a plurality of transmit signal paths, each transmit signal path comprising a transmitter and a power amplifier, and a power supply system according to the present invention coupled to the baseband interface and the power amplifiers and configured to provide each of the power amplifiers with electrical energy at a supply voltage corresponding to the beamforming information.

Further, it is provided:
A method for supplying electrical power to power amplifiers of a smart antenna, the method comprising receiving beamforming information, calculating for each one of the power amplifiers a voltage amplitude based on the received beamforming information, setting for each one of the power amplifiers a supply voltage based on the calculated voltage amplitude, and providing each of the power amplifiers with electrical energy at the respective supply voltage.

The present invention is based on the finding that performing envelop tracking is a very complex task and requires a complex hardware arrangement and very fast configurable voltage sources.

Further, the present invention acknowledges that when beamforming is performed, different signal amplitudes are applied to different antenna elements and therefore different power amplifiers. For example, if side lobe suppression of a beam is applied, the amplitudes of the signals are reduced at the edges of the antenna array for example to half the maximum amplitude or even more.

The present invention takes the above into account and provides a power supply system that does not configure the supply voltages of the power amplifiers of a smart antenna according to the envelop of the input signal. Instead, the power supply system uses the beamforming information that is available in the smart antenna to determine the required supply voltage levels for the single power amplifiers.

The term beamforming information refers to the information that is provided e.g. by a basedband unit to the smart antenna regarding the beams that are to be formed by the smart antenna. Such information may e.g. be provided in the form of beamforming vectors that comprise for each antenna element a phase information and an amplitude information. Usually such beamforming information will be provided for every beam that a smart antenna should emit or form.

As already indicated above, when beamforming is used in a smart antenna, not all antenna elements emit signals with the maximum amplitude. For example, when side lobes are suppressed, the antenna elements in the center of the antenna array of the smart antenna will emit signals with larger amplitudes than the antenna elements at the edges of the antenna array. The beamforming information, e.g. beamforming vectors, comprise information about the amplitude of the signals that each antenna element emits. Consequently, this information may be used by the power supply system to determine the required supply voltage for each one of the power amplifiers in the smart antenna.

To this end, the power supply system comprises the communication interface for receiving the beamforming information. The communication interface is coupled to the amplitude calculator that receives the beamforming information. The amplitude calculator will then use the beamforming information to calculate a voltage amplitude that is required for the supply voltage of each power amplifier to output the required signal amplitude as indicated by the beamforming information.

The calculated voltage amplitude is then provided to the controllable energy source that sets the supply voltages for the power amplifiers accordingly. It is understood, that the controllable energy source may e.g. comprise a dedicated controllable voltage source for every power amplifier.

The power amplifier will then be provided with a supply voltage that exactly matches the requirements of the respective signal that is to be emitted by the respective antenna element.

It is understood, that the communication interface may e.g. be a physical interface like a digital interface or the like. The communication interface of the power supply system may e.g. be the baseband interface of the smart antenna in which the power supply system is used. The baseband interface may e.g. be a CPRI compatible interface or any other digital interface that may be used to provide the beamforming information and the data to be transmitted from the baseband unit to the smart antenna.

As alternative, the communication interface may e.g. be an application interface or API or function call or the like. In this case, at least part of the functions of the power supply system may be implemented in software and may be executed on a processing device in the smart antenna. For example, the communication interface may be the baseband interface of the smart antenna, and the amplitude calculator may be implemented as program component that is executed in a processing device. Such a processing device may e.g. be a dedicated processing device or a processing device of the smart antenna that also performs other control functions in the smart antenna, like e.g. beamforming functions.

The transmit signal paths of the smart antenna comprise the transmitters that convert digital signals, e.g. IQ signals into the respective analog signals. The analog signals are then provided to the power amplifier, where the analog signals are beamformed and amplified.

The power supply system will therefore provide the power amplifiers with the respective supply voltage.

With the power supply system of the present invention it is possible to reduce the power consumption of the power amplifiers in the smart antenna. However, in contrast to envelope tracking, the present invention may be used without delaying the signals. Further, since the beamforming information usually will be constant for at least one time or communication frame of the respective communication system, the speed at which the supply voltage for the amplifiers changes is very slow when compared to envelope tracking. In reality the beamforming vectors may be constant longer than a single frame. Therefore, the requirements regarding configuration speed for the controllable energy source are drastically reduced when compared to envelop tracking. Further, the quick voltage changes of envelop tracking lead to an increased power consumption or reduced efficiency of the power amplifiers that reduce the power saving effect. The slow changing voltages in the power supply system of the present invention in contrast do not increase the power consumption or reduce the efficiency of the power amplifiers.

The present invention therefore increases the efficiency of the power supply of the smart antenna with little technical effort.

It is understood, that although the present invention relates to the transmit signal direction and the smart antenna is described as comprising transmit signal paths, the smart antenna may in addition also comprise receive signal paths. To this end, at least some of the elements as disclosed herein as part of the transmit signal paths may also be provided in combined elements, like e.g. a transceiver. Such a transceiver may incorporate a transmitter and a receiver. Further, for example combined beamforming units may be provided that handle the signals in transmit and receive direction.

Further embodiments of the present invention are subject of the further subclaims and of the following description, referring to the drawings.

In an embodiment, the beamforming information may comprise beamforming vectors for a number, i.e. one or more, of beams. The beamforming vectors may comprise at least a signal amplitude for each one of the power amplifiers. In addition, the amplitude calculator may comprise a summing unit that may be configured to sum for each one of the power amplifiers the signal amplitudes indicated in the beamforming information for the respective power amplifier, and the amplitude calculator may comprise a mapping unit that may be configured to map the calculated sums to a respective voltage amplitude for the respective power amplifier.

It is understood, that e.g. a baseband unit may indicate to the smart antenna to emit signals in a single beam or in a plurality of beams concurrently. Therefore, the beamforming information may comprise beamforming vectors for a single beam or for multiple beams. It is further understood, that in the case of the beamforming information referring only to a single beam, the summing unit will simply pass-through the signal amplitudes of the beamforming vector to the mapping unit.

In case of multiple beams or beamforming vectors being provided in the beamforming unit, the summing unit will sum up for each power amplifier all signal amplitudes that refer to the respective power amplifier or antenna element.

The signal amplitudes may e.g. be provided as numbers between 0.0 and 1.0 or as percentage or the like. In any case, the maximum signal amplitude for a power amplifier may be 1.0 or 100%. It is understood, that any other number range between a minimum and a maximum value may also be chosen.

The mapping unit will then map for each one of the power amplifiers the resulting signal amplitude to a respective voltage amplitude, i.e. the amplitude of the source or supply voltage, for the respective power amplifier.

The mapping unit may be coupled to the controllable energy source via a digital or analog interface to provide the resulting voltage amplitude to the controllable energy source.

The controllable energy source may then supply each of the power amplifiers with the respective voltage amplitude as required to provide the indicated signal amplitude.

In another embodiment, the mapping unit may comprise a mapping table that may comprise the corresponding voltage amplitudes for predetermined signal amplitudes.

In a further embodiment, the mapping unit may comprise a processing unit configured to calculate the voltage amplitudes based on a predetermined formula and a respective signal amplitude.

The mapping unit may use any of the two above-mentioned schemes for determining the voltage amplitude for a given signal amplitude.

The mapping table provides a very simple and quick solution to determine voltage amplitudes. However, a processing unit in the mapping unit may be required to perform an interpolation between two values stored in the mapping table, if the exact signal amplitude is not stored in the mapping table.

If a processing unit is provided that calculates voltage amplitudes based on a respective formula using the signal amplitude as input, the voltage amplitudes may be defined very flexibly.

It is understood, that an interface may be provided for updating the mapping table or the formula. It is further understood, that a dedicated mapping table or a dedicated formula may be provided for every one of the power amplifiers to account for part variances of the power amplifiers.

In an embodiment, the transmit signal paths may each comprise a beamforming unit, and the amplitude calculator of the power supply system may be provided in the beamforming units of the transmit signal paths.

The beamforming units perform beamforming of the input signals of the respective signal transmit path. This means that the beamforming units may phase shift the incoming signals according to the respective beamforming vectors and may adjust the amplitude of the incoming signals.

If input signals for more than one beam are provided to the beamforming units together with respective beamforming vectors, the beamforming units will first perform the respective phase shifts, then the amplitude adjustments and will then add the resulting signals.

Therefore, the amplitude information that is required to determine the supply voltages for the power amplifiers is known in the beamforming units. The amplitude calculator in this embodiment may therefore be provided as decentralized or distributed unit, where local amplitude calculator units or entities are provided in each one of the beamforming units.

The beamforming units may usually operate in the digital domain and provide digital signals to the transmitters or include the respective digital-to-analog converters. Since the amplitude coefficients for the incoming signals are known as digital values in the beamforming unit, the amplitude calculator may use this value to determine the required supply voltage amplitude.

It is understood, that a dedicated controllable power supply may be provided for every transmit signal path or every power amplifier. The controllable power sources may then be coupled to the respective beamforming unit, which also comprises the local amplitude calculators.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a power supply system according to the present invention;
Fig. 2 shows a block diagram of an embodiment of an amplitude calculator according to the present invention;
Fig. 3 shows a block diagram of an embodiment of a column of a smart antenna according to the present invention;
Fig. 4 shows a block diagram of another embodiment of a smart antenna according to the present invention;
Fig. 5 shows a block diagram of an embodiment of a radio unit according to the present invention;
Fig. 6 shows a block diagram of an embodiment of a supply control chain according to the present invention; and
Fig. 7 shows a flow diagram of an embodiment of a method according to the present invention.

In the figures like reference signs denote like elements unless stated otherwise.

### DETAILED DESCRIPTION OF THE DRAWINGS

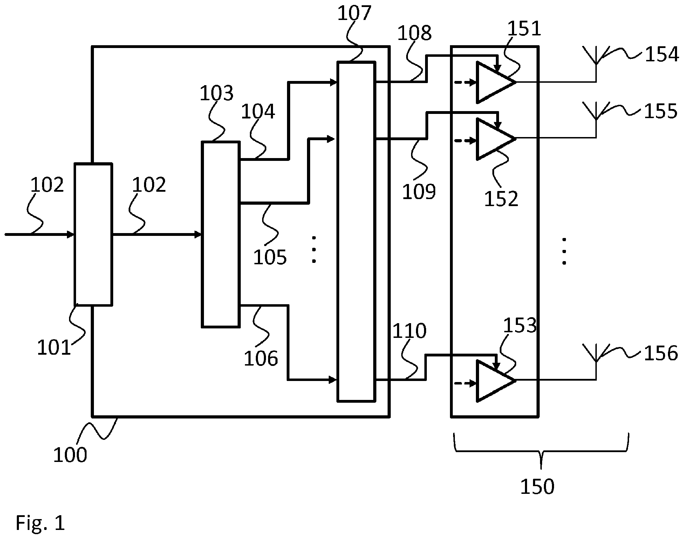

Fig. 1 shows a block diagram of a power supply system 100 for supplying electrical power to power amplifiers 151, 152, 153 of a smart antenna 150. The power supply system 100 comprises a communication interface 101 that is coupled to an amplitude calculator 103. The amplitude calculator 103 is coupled to a controllable energy source 107. The controllable energy source 107 provides electrical energy to power amplifiers 151, 152, 153 of the smart antenna 150. The smart antenna 150 comprises the power amplifiers 151, 152, 153 that receive input signals and each provide an amplified signal to a respective antenna element 154, 155, 156.

The communication interface 101 receives beamforming information 102. Such beamforming information 102 may e.g. be provided to the power supply system 100 by a baseband unit of the communication system in which the smart antenna 150 and the power supply system 100 are employed. It is understood that the beamforming information 102 may also be provided by any other entity that has control over the beamforming in the smart antenna 150.

The beamforming information 102 is then provided to the amplitude calculator 103. The amplitude calculator 103 is an entity that calculates for each one of the power amplifiers 151, 152, 153 a voltage amplitude 104, 105, 106 based on the received beamforming information 102. As explained above, the amplitudes of the signals that each one of the antenna elements 154, 155, 156 should emit depends strongly on the beamforming, e.g. the direction and size of the beam that the smart antenna 150 has to emit, and the power consumption of the power amplifiers 151, 152, 153 depends on the supply voltage. Therefore, the expected signal amplitudes define the required amplitudes for the supply voltages 108, 109, 110 of the power amplifiers 151, 152, 153.

In an exemplary beamforming scenario, the amplitudes for the single antenna elements 154, 155, 156 e.g. of an 8x8 antenna array may be as follows:

| | | | | | | | |
|---|---|---|---|---|---|---|---|
| 0.015 | 0.047 | 0.090 | 0.121 | 0.121 | 0.090 | 0.047 | 0.015 |
| 0.047 | 0.150 | 0.287 | 0.387 | 0.387 | 0.287 | 0.150 | 0.047 |
| 0.090 | 0.287 | 0.551 | 0.742 | 0.742 | 0.551 | 0.287 | 0.090 |
| 0.121 | 0.387 | 0.742 | 1.000 | 1.000 | 0.742 | 0.387 | 0.121 |
| 0.121 | 0.387 | 0.742 | 1.000 | 1.000 | 0.742 | 0.387 | 0.121 |
| 0.090 | 0.287 | 0.551 | 0.742 | 0.742 | 0.551 | 0.287 | 0.090 |
| 0.047 | 0.150 | 0.287 | 0.387 | 0.387 | 0.287 | 0.150 | 0.047 |
| 0.015 | 0.047 | 0.090 | 0.121 | 0.121 | 0.090 | 0.047 | 0.015 |

In the above example side lobe suppression is applied to the beamforming. It can be seen that only the inner four antenna elements of the antenna array are transmitting with full power (with an amplitude of "1") while at the edges the amplitudes and therefore the power is reduced. In the above example the average amplitude would be around 0.3. This means, that only a third of the maximum power is transmitted if side lobe suppression is applied.

If multiple beams are transmitted at the same time, the signals of the different channels or beams are added up. In any case, from the sum of the beamforming amplitude vectors, an amplitude per transmit channel can be calculated. The calculated beamforming amplitude will usually be constant for the transmission of the beam or the set of beams.

The controllable energy source 107 then receives the calculated voltage amplitudes 104, 105, 106 and sets for each one of the power amplifiers 151, 152, 153 a supply voltage 108, 109, 110 based on the calculated voltage amplitude 104, 105, 106. The power amplifiers 151, 152, 153 are then each provided with electrical energy at the respective supply voltage 108, 109, 110. This means that each one of the power amplifiers 151, 152, 153 may receive an individually configured supply voltage 108, 109, 110 that is based on the beamforming amplitude for the transmission of the beam or the set of beams.

It is understood, that the input signals for the power amplifiers 151, 152, 153 may e.g. be provided together with the beamforming information 102 by the above-mentioned baseband unit or any other respective source in a communication system.

It is further understood, that all the above and below explanations may refer to antennas with antenna arrays, where the antenna elements of the antenna arrays are pair-wise arranged as cross-polarized antenna elements, i.e. two antenna elements are in each case grouped as on of the cross-polarized pairs of antenna elements. This means for example that an 8x8 antenna array would comprise 64 first antenna elements and 64 second antenna elements that are arranged cross polarized to the first antenna elements.

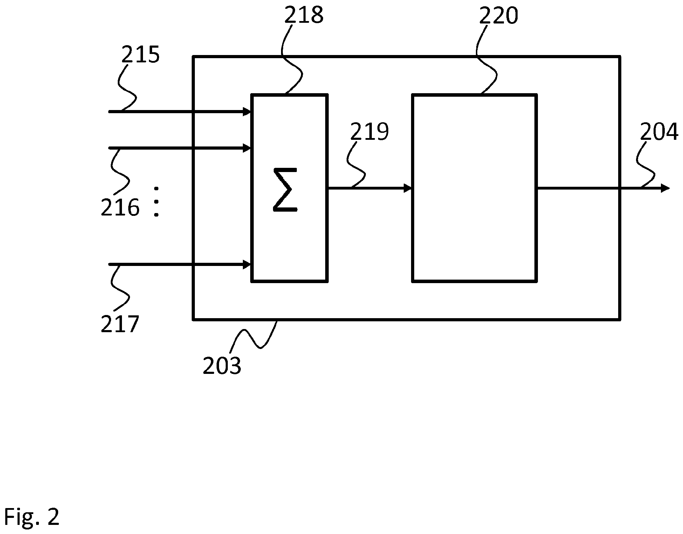

Fig. 2 shows a block diagram of an amplitude calculator 203. As explained above, the beamforming information 102 may refer to a single beam or a set or group of beams. This means that the beamforming information 102 may comprise a single amplitude information for every antenna element of the smart antenna or may comprise multiple amplitude information items (one per beam) for every antenna element of the smart antenna.

The amplitude calculator 203 therefore comprises a summing unit 218 and a mapping unit 220 coupled to the summing unit 218. During operation, the summing unit 218 receives the signal amplitudes 215, 216, 217 that are provided in the beamforming information and sums up all received signal amplitudes 215, 216, 217. The sum 219 of all amplitudes is then provided to the mapping unit 220. The mapping unit 220 then maps the calculated sums 219 to a respective voltage amplitude 204 for the respective power amplifier.

It is understood, that the amplitude calculator 203 may comprise a signal chain or path for each one of the power amplifiers in the smart antenna. Further, the amplitude calculator 203 may be distributed and the single signal paths may be provided together with the respective power amplifiers in the respective radio unit.

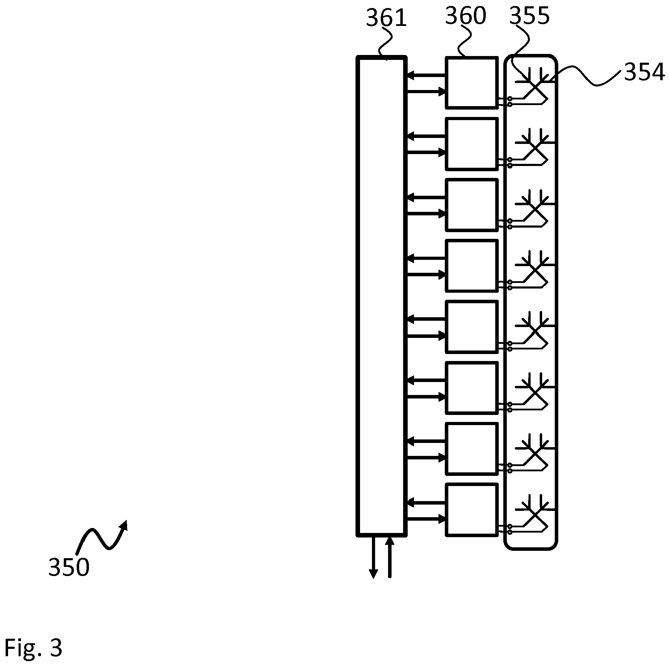

Fig. 3 shows a block diagram of a column of a smart antenna 350. For providing massive MIMO or beamforming in smart antennas a large number of independent receive and transmit paths (RX/TX) are required. A possibility to provide this large number of receive and transmit paths is by providing single columns in the smart antenna 350. It is understood, that only the first elements of the shown column are provided with reference signs for sake of clarity.

The columns each comprise pairs of cross-polarized antenna elements 354, 355. In addition, a radio unit 360 is provided for each pair of cross-polarized antenna elements 354, 355. The radio units 360 are all coupled to a combiner 361 that handles the incoming and outgoing signals for the row of receive and transmit paths.

The radio units 360 may e.g. comprise the required transceivers and amplifiers for the respective receive and transmit path. The transceivers may e.g. comprise a digital interface to the combiner 361, e.g. an IQ-interface. It is understood, that an analog interface is also possible.

The combiner 361 may for example be a digital combiner and may include the respective beamforming units. In receive direction, the beamforming units may apply the respective beamforming vectors to the received signals and a summing unit may then sum up the received signals. In transmit direction, the beamforming units may duplicate a signal to be transmitted and then apply the respective beamforming vectors to the signals that are then transmitted to the radio units 360.

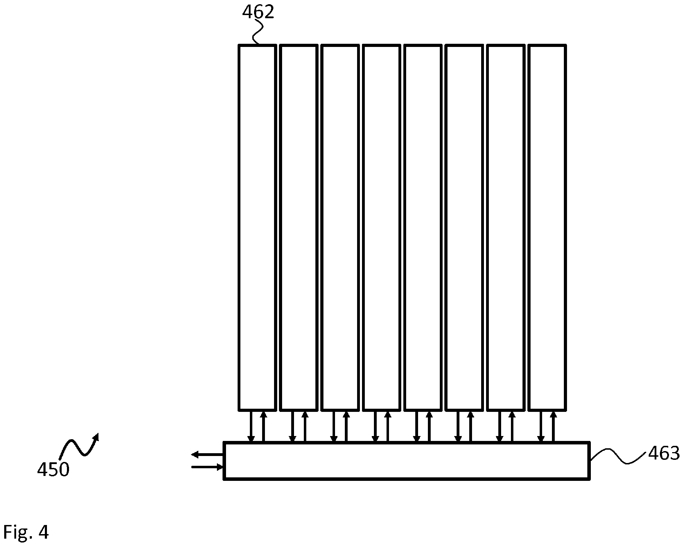

Fig. 4 shows a block diagram of a smart antenna 450 that comprises eight columns 462, wherein only the first column is referenced for sake of clarity. Each of the columns 462 may be a column as shown above in Fig. 3.

In addition, a combiner and interface 463 is provided that handles the signals that are transmitted the columns 462 or received by the columns. The combiner and interface 463 may in receive direction e.g. add the signals received by the single columns. In transmit direction the combiner and interface 463 may duplicate the respective signals and provide these to the respective columns.

It is understood, that the partitioning of the smart antennas 350, 450 is just exemplarily and that the single functions and/or elements may be distributed differently in other embodiments.

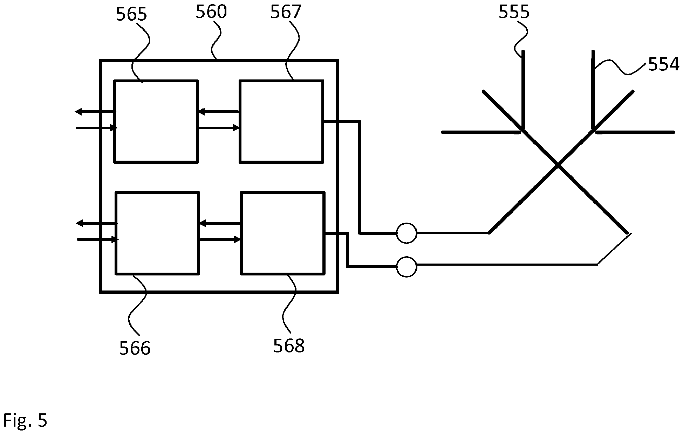

Fig. 5 shows a block diagram of a radio unit 560. The radio unit 560 comprises two signal paths, wherein each signal path is coupled to one of two cross-polarized antenna elements 554, 555. Each signal path comprises a transceiver 565, 566 in the input side and a radio frontend 567, 568 provided between the transceivers 565, 566 and the antenna elements 554, 555.

During operation, the transceivers receive digital data or output digital data, e.g. to the above-mentioned combiner. Such data may e.g. be IQ-data of an IQ data stream. The transceivers 565, 566 will in transmit direction convert the incoming signals into analog signals that are then amplified in the radio frontends 567, 568. In receive direction an LNA (low noise amplifier) may be provided in the radio frontends 567, 568 and the transceivers 565, 566 may convert the incoming analog signals into digital signals.

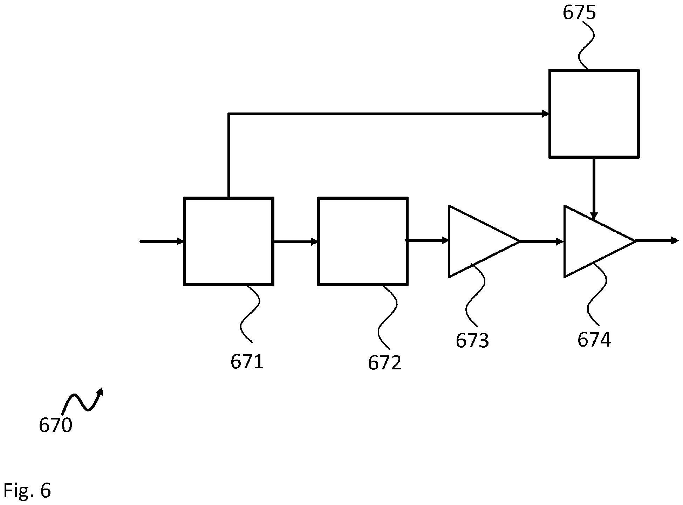

Fig. 6 shows a block diagram of a supply control chain 670. The supply control chain 670 shows the elements that are used according to the present invention to adapt the supply voltage of a power amplifiers in the smart antenna and shows some of the further elements that are provided in the transmit signal chain. It is understood, that in a smart antenna a respective supply control chain 670 may be provided for every antenna element or power amplifier.

The supply control chain 670 comprises a beamforming element 671 that is coupled to a transmitter 672. The transmitter 672 is coupled to a pre-amplifier 673. The pre-amplifier 673 is coupled to a power amplifier 674 and the power amplifier 674 provides the amplified signal to a respective antenna element (not shown). Further, an adjustable power supply 675 is provided for the power amplifier 674. A control input of the adjustable power supply 675 is coupled to the beamforming element 671 and a power output of the adjustable power supply 675 is coupled to a supply input of the power amplifier 674.

The beamforming element 671 will usually receive beamforming vectors and respective data to be transmitted. This means that in the beamforming element 671 all information is available that is required to calculate the required supply voltage for the power amplifier 674. Therefore, the amplitude calculator may be implemented in the beamforming element 671. The beamforming element 671 will therefore calculate the required voltage amplitude for the supply voltage of the power amplifier 674 and control the adjustable power supply 675 accordingly.

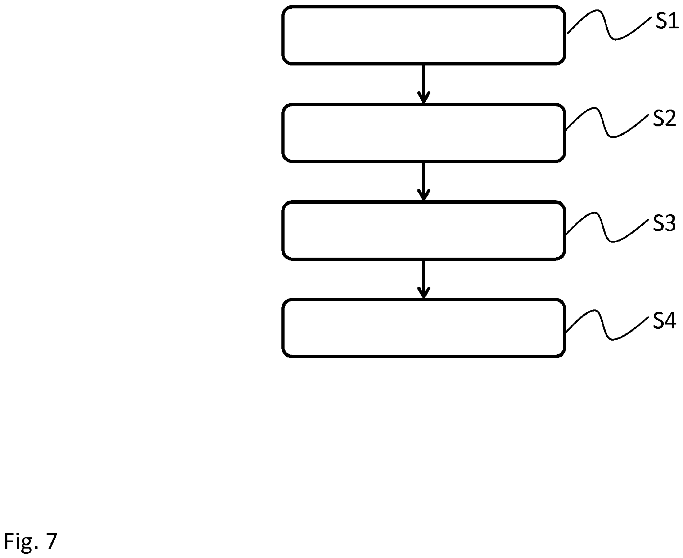

For sake of clarity in the following description of the method-based Fig. 7 the reference signs used above in the description of apparatus-based Figs. 1 - 6 will be maintained.

Fig. 7 shows a flow diagram of a method for supplying electrical power to power amplifiers 151, 152, 153 of a smart antenna 150, 350, 450.

The method comprises receiving S1 beamforming information 102, calculating S2 for each one of the power amplifiers 151, 152, 153 a voltage amplitude 104, 105, 106, 204 based on the received beamforming information 102, setting S3 for each one of the power amplifiers 151, 152, 153 a supply voltage 108, 109, 110 based on the calculated voltage amplitude 104, 105, 106, 204, and providing S4 each of the power amplifiers 151, 152, 153 with electrical energy at the respective supply voltage 108, 109, 110.

The beamforming information 102 may comprises beamforming vectors for a number of beams, the beamforming vectors comprising at least a signal amplitude 215, 216, 217 for each one of the antenna elements of the smart antenna and therefore for the respective power amplifiers 151, 152, 153. The step of calculating S2 may therefore comprise summing for each one of the power amplifiers 151, 152, 153 the signal amplitudes 215, 216, 217 indicated in the beamforming information 102 for the respective power amplifier 151, 152, 153, and mapping the calculated sums 219 to a respective voltage amplitude 104, 105, 106, 204 for the respective power amplifier 151, 152, 153.

Mapping may be performed with different embodiments. For example, mapping may comprise reading from a mapping table the corresponding voltage amplitudes 104, 105, 106, 204 for predetermined signal amplitudes 215, 216, 217. As alternative, mapping may comprise calculating the voltage amplitudes 104, 105, 106, 204 based on a predetermined formula and a respective signal amplitude 215, 216, 217.

The step of calculating may for example be performed in each one of a plurality of beamforming units in transmit signal paths of the smart antenna 150, 350, 450.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a power supply system 100 for power amplifiers 151, 152, 153, 674 of a smart antenna 150, 350, 450, the power supply system 100 comprising a communication interface 101 configured to receive beamforming information 102, an amplitude calculator 103, 203 coupled to the communication interface 101 and configured to calculate for each one of the power amplifiers 151, 152, 153, 674 a voltage amplitude 104, 105, 106, 204 based on the received beamforming information 102, and a controllable energy source 107, 675 that is configured to set for each one of the power amplifiers 151, 152, 153, 674 a supply voltage 108, 109, 110 based on the calculated voltage amplitude 104, 105, 106, 204 and to provide each of the power amplifiers 151, 152, 153 with electrical energy at the respective supply voltage 108, 109, 110. Further, the present invention provides a smart antenna and a method.

### List of reference signs

- 100: power supply system
- 101: communication interface
- 102: beamforming information
- 103, 203: amplitude calculator
- 104, 105, 106, 204: voltage amplitude
- 107: controllable energy source
- 108, 109, 110: supply voltage

- 215, 216, 217: signal amplitude
- 218: summing unit
- 219: sum
- 220: mapping unit

- 150, 350, 450: smart antenna
- 151, 152, 153: power amplifier
- 154, 155, 156, 354, 355, 554, 555: antenna element

- 360, 560: radio unit
- 361: combiner
- 462: antenna column
- 463: interface

- 565, 566: transceiver
- 567, 568: radio frontend

- 670: supply control chain
- 671: beamforming element
- 672: transmitter
- 673: pre-amplifier
- 674: power amplifier
- 675: adjustable power supply

- S1, S2, S3, S4: method steps

## Claims

1. Power supply system (100) for power amplifiers (151, 152, 153, 674) of a smart antenna (150, 350, 450), the power supply system (100) comprising:
a communication interface (101) configured to receive beamforming information (102),
an amplitude calculator (103, 203) coupled to the communication interface (101) and configured to calculate for each one of the power amplifiers (151, 152, 153, 674) a voltage amplitude (104, 105, 106, 204) based on the received beamforming information (102), and
a controllable energy source (107, 675) that is configured to set for each one of the power amplifiers (151, 152, 153, 674) a supply voltage (108, 109, 110) based on the calculated voltage amplitude (104, 105, 106, 204) and to provide each of the power amplifiers (151, 152, 153) with electrical energy at the respective supply voltage (108, 109, 110).

2. Power supply system (100) according to claim 1, wherein the beamforming information (102) comprises beamforming vectors for a number of beams, the beamforming vectors comprising at least a signal amplitude (215, 216, 217) for each one of the power amplifiers (151, 152, 153), and wherein the amplitude calculator (103, 203) comprises a summing unit (218) that is configured to sum for each one of the power amplifiers (151, 152, 153) the signal amplitudes (215, 216, 217) indicated in the beamforming information (102) for the respective power amplifier (151, 152, 153), and wherein the amplitude calculator (103, 203) comprises a mapping unit (220) that is configured to map the calculated sums (219) to a respective voltage amplitude (104, 105, 106, 204) for the respective power amplifier (151, 152, 153).

3. Power supply system (100) according to claim 2, wherein the mapping unit (220) comprises a mapping table that comprises the corresponding voltage amplitudes (104, 105, 106, 204) for predetermined signal amplitudes (215, 216, 217).

4. Power supply system (100) according to claim 2, wherein the mapping unit (220) comprises a processing unit configured to calculate the voltage amplitudes (104, 105, 106, 204) based on a predetermined formula and a respective signal amplitude (215, 216, 217).

5. Smart antenna (150, 350, 450) comprising:
a baseband interface couplable to a baseband unit and configured to receive beamforming information (102),
a plurality of transmit signal paths, each transmit signal path comprising a transmitter and a power amplifier (151, 152, 153),
a power supply system (100) according to any one of the preceding claims coupled to the baseband interface and the power amplifiers (151, 152, 153) and configured to provide each of the power amplifiers (151, 152, 153) with electrical energy at a supply voltage (108, 109, 110) corresponding to the beamforming information (102).

6. Smart antenna (150, 350, 450) according to claim 5, wherein the transmit signal paths each comprise a beamforming unit, and wherein the amplitude calculator (103, 203) of the power supply system (100) is provided in the beamforming units of the transmit signal paths.

7. Method for supplying electrical power to power amplifiers (151, 152, 153) of a smart antenna (150, 350, 450), the method comprising:
receiving (S1) beamforming information (102),
calculating (S2) for each one of the power amplifiers (151, 152, 153) a voltage amplitude (104, 105, 106, 204) based on the received beamforming information (102),
setting (S3) for each one of the power amplifiers (151, 152, 153) a supply voltage (108, 109, 110) based on the calculated voltage amplitude (104, 105, 106, 204), and
providing (S4) each of the power amplifiers (151, 152, 153) with electrical energy at the respective supply voltage (108, 109, 110).

8. Method according to claim 7, wherein the beamforming information (102) comprises beamforming vectors for a number of beams, the beamforming vectors comprising at least a signal amplitude (215, 216, 217) for each one of the power amplifiers (151, 152, 153), and wherein calculating comprises summing for each one of the power amplifiers (151, 152, 153) the signal amplitudes (215, 216, 217) indicated in the beamforming information (102) for the respective power amplifier (151, 152, 153), and mapping the calculated sums (219) to a respective voltage amplitude (104, 105, 106, 204) for the respective power amplifier (151, 152, 153).

9. Method according to claim 8, wherein mapping comprises reading from a mapping table corresponding voltage amplitudes (104, 105, 106, 204) for predetermined signal amplitudes (215, 216, 217).

10. Method according to claim 8, wherein mapping comprises calculating the voltage amplitudes (104, 105, 106, 204) based on a predetermined formula and a respective signal amplitude (215, 216, 217).

11. Method according to any one of the preceding claims, wherein calculating is performed in each one of a plurality of beamforming units in transmit signal paths of the smart antenna (150, 350, 450).
